# EUROPÄISCHE PATENTANMELDUNG

(11) **EP 4 309 984 A1**
(43) Veröffentlichungstag der Anmeldung: **24.01.2024**
(21) Anmeldenummer: 23186116.2
(22) Anmeldetag: 18.07.2023
(51) Int. Cl.: B62K 5/08

(54) **ANTRIEBSSYSTEM FÜR EIN MUSKEL-ELEKTRO-HYBRIDFAHRZEUG UND VERFAHREN ZUM BETREIBEN EINES ANTRIEBSSYSTEMS FÜR EIN MUSKEL-ELEKTRO-HYBRIDFAHRZEUG**

(30) Priorität: 19.07.2022 DE 102022207335
(71) Anmelder: ZF Friedrichshafen AG, 88046 Friedrichshafen (DE)
(72) Erfinder: Lippenberger, Ingo, 88263 Horgenzell (DE)
(74) Vertreter: ZF Friedrichshafen AG

(57) **Zusammenfassung**

Die Erfindung betrifft ein Antriebssystem für ein Muskel-Elektro-Hybridfahrzeug (1), umfassend ein Tretlagergetriebe (2), das dazu eingerichtet ist, zumindest mit einem mit Muskelkraft erzeugten Antriebsdrehmoment von einem Benutzer über eine Tretkurbelwelle (3) beaufschlagt zu werden, um wenigstens ein Fahrzeugrad (4c) zumindest mittelbar drehanzutreiben, sowie wenigstens eine erste antreibbare und lenkbare Achse (13a), aufweisend eine erste elektromechanische Antriebseinheit (5a) und wenigstens eine zweite elektromechanische Antriebseinheit (5b), wobei die erste Antriebseinheit (5a) einem damit wirkverbundenen Fahrzeugrad (4a) der linken Fahrzeugseite zugeordnet ist und die zweite Antriebseinheit (5b) einem damit wirkverbundenen weiteren Fahrzeugrad (4b) der rechten Fahrzeugseite zugeordnet ist, wobei die Antriebseinheiten (5a, 5b) mit einer Steuereinrichtung (16) elektronisch verbunden sind, die dazu eingerichtet ist, die Antriebseinheiten (5a, 5b) der jeweiligen antreibbaren Achse (13a) zur Einleitung und Ausführung eines Lenkmanövers derart zu steuern, dass eine Differenz zwischen einem ersten Antriebsdrehmoment der ersten Antriebseinheit (5a) und einem zweiten Antriebsdrehmoment der zweiten Antriebseinheit (5b) eingestellt wird. Ferner betrifft die Erfindung ein Muskel-Elektro-Hybridfahrzeug (1) mit einem solchen Antriebssystem sowie ein Verfahren zum Betreiben des Antriebssystems.

## Beschreibung

Die Erfindung betrifft ein Antriebssystem für ein Muskel-Elektro-Hybridfahrzeug sowie ein Muskel-Elektro-Hybridfahrzeug. Außerdem betrifft die Erfindung ein Verfahren zum Betreiben eines Antriebssystems für ein Muskel-Elektro-Hybridfahrzeug.

Die DE 197 32 468 A1 betrifft ein Muskel-Elektro-Hybridfahrzeug, bei dem neben einer mit einem Generator und mindestens einem Elektromotor verbundene zusätzlichen Batterie ein Sensor zur Leistungsmessung vorgesehen ist. Damit soll ein systembedingter Leistungsverlust, wie beispielsweise ein elektromechanischer Übertragungsverlust, wegen einer Rollreibung der Räder und wegen eines Luftwiderstands bedingter Leistungsverlust, mittels einem dem Leistungsverlust entsprechendem Antrieb kompensiert werden.

Die Aufgabe der vorliegenden Erfindung besteht darin, einen Antrieb für ein Muskel-Elektro-Hybridfahrzeug weiterzuentwickeln. Die Aufgabe wird gelöst durch ein Antriebssystem mit den Merkmalen des unabhängigen Patentanspruchs 1, durch ein Verfahren zum Betreiben eines Muskel-Elektro-Hybridfahrzeugs mit den Merkmalen des Patentanspruchs 11 sowie durch ein Muskel-Elektro-Hybridfahrzeug mit den Merkmalen des Patentanspruchs 15. Vorteilhafte Ausführungsformen sind Gegenstand der Unteransprüche, der folgenden Beschreibung sowie der Figuren.

Ein erfindungsgemäßes Antriebssystem für ein Muskel-Elektro-Hybridfahrzeug umfasst ein Tretlagergetriebe, das dazu eingerichtet ist, zumindest mit einem mit Muskelkraft erzeugten Antriebsdrehmoment von einem Benutzer über eine Tretkurbelwelle beaufschlagt zu werden, um wenigstens ein Fahrzeugrad zumindest mittelbar drehanzutreiben, sowie wenigstens eine erste antreibbare und lenkbare Achse, aufweisend eine erste elektromechanische Antriebseinheit und wenigstens eine zweite elektromechanische Antriebseinheit, wobei die erste Antriebseinheit einem damit wirkverbundenen Fahrzeugrad der linken Fahrzeugseite zugeordnet ist und die zweite Antriebseinheit einem damit wirkverbundenen weiteren Fahrzeugrad der rechten Fahrzeugseite zugeordnet ist, wobei die Antriebseinheiten mit einer Steuereinrichtung elektronisch verbunden sind, die dazu eingerichtet ist, die Antriebseinheiten der jeweiligen antreibbaren Achse zur Einleitung und Ausführung eines Lenkmanövers derart zu steuern, dass eine Differenz zwischen einem ersten Antriebsdrehmoment der ersten Antriebseinheit und einem zweiten Antriebsdrehmoment der zweiten Antriebseinheit eingestellt wird. Damit wird eine Fahrtrichtungssteuerung nicht direkt durch den Fahrer per mechanisch verbundenem Lenker, sondern durch Einstellung einer Antriebskraftdifferenz zwischen den Antriebseinheiten einer gemeinsamen lenkbaren Achse eingestellt. Mit anderen Worten kann durch Einstellung eines bestimmten Antriebsdrehmoments bzw. Antriebskraft an den Antriebseinheiten einer gemeinsamen Achse ein Lenkwinkel eines mit der jeweiligen Antriebseinheit wirkverbundenen Fahrzeugrades eingestellt werden. Die Steuereinrichtung ist also dazu eingerichtet, die Antriebseinheiten der zumindest ersten antreibbaren Achse derart zu steuern, dass zur Einleitung und Ausführung eines Lenkmanövers eine Antriebskraftdifferenz an den Antriebseinheiten eingestellt wird, wobei infolge der Antriebskraftdifferenz ein Lenkwinkel der mit den Antriebseinheiten wirkverbundenen Fahrzeugrädern eingestellt wird. Das graduelle Lenkwinkelverhalten des jeweiligen Fahrzeugrades ist proportional zu der Antriebskraft-Differenz. Das hier beschriebene System ist folglich als Steer-by-Wire-System ausgeführt, wobei manuell eingegebene Lenkbefehle als elektronische Signale an die Steuereinrichtung übertragen werden, die die Antriebseinheiten entsprechend steuern bzw. regeln kann.

Beispielsweise bei einem als Velomobil ausgebildeten Muskel-Elektro-Hybridfahrzeug, bei dem sich der Fahrer sitzend oder liegend im Fahrzeug befindet, ist das Tretlagergetriebe im vorderen Teil des Fahrzeugs angeordnet, wobei das über die Tretkurbelwelle von dem Benutzer mechanisch eingebrachte erste Antriebsdrehmoment beispielsweise direkt auf mindestens ein Vorderrad des Fahrzeugs übertragbar ist oder über ein Ritzel mit damit wirkverbundener Antriebskette zu wenigstens einem Hinterrad des Fahrzeugs weitergeleitet werden kann. Die Antriebskette kann über Umlenkrollen bzw. Umlenkzahnräder im Bodenbereich des Fahrzeugs geführt werden.

Mittels der ersten elektromechanischen Antriebseinheit ist ein erstes Antriebsdrehmoment erzeugbar, das auf ein erstes Fahrzeugrad der jeweiligen angetriebenen Achse übertragbar ist. Mittels der zweiten elektromechanischen Antriebseinheit ist ein zweites Antriebsdrehmoment erzeugbar, das auf ein zweites Fahrzeugrad derselben angetriebenen Achse übertragbar ist. Die beiden Fahrzeugräder sind bevorzugt auf entgegengesetzten Seiten der Achse angeordnet. Somit ist denkbar, dass eines der Fahrzeugräder des Fahrzeugs teilweise mittels Muskelkraft und teilweise mittels eines Antriebsdrehmoments einer der Antriebseinheiten antreibbar ist. Es kann ein Gesamtantriebsdrehmoment erzeugt werden, das aus einem aus Muskelkraft mechanisch eingebrachten Antriebsdrehmoment sowie aus einem Motordrehmoment der Antriebseinheiten besteht. Vorzugsweise wird das aus Muskelkraft mechanisch eingebrachte Antriebsdrehmoment auf mindestens ein Hinterrad des Fahrzeugs übertragen, wobei das jeweilige Motordrehmoment auf die Vorderräder des Fahrzeugs übertragen wird, sofern nur eine Achse des Fahrzeugs antreibbar ausgeführt ist. Denkbar ist, dass ein mit Muskelkraft antreibbares Fahrzeugrad gleichzeitig ein elektromechanische antreibbares Fahrzeugrad ist, das in Wirkverbindung mit einer der Antriebseinheiten steht.

Der Antrieb des Fahrzeugs, sei es in Vorwärtsfahrtrichtung oder in Rückwärtsfahrtrichtung, erfolgt, wenn zumindest eine Antriebseinheit des Fahrzeugs ein Antriebsdrehmoment bzw. eine Antriebskraft erzeugt und auf das damit wirkverbundene Fahrzeugrad überträgt.

Ein Lenkmanöver kann in unterschiedlicher Weise eingeleitet und ausgeführt werden. Jedenfalls wird an der antreibbaren und lenkbaren ersten Achse des Fahrzeugs eine Antriebskraftdifferenz erzeugt, wobei das durch die erste Antriebseinheit erzeugte und auf das erste Fahrzeugrad übertragene erste Antriebsdrehmoment und das durch die zweite Antriebseinheit erzeugte und auf das zweite Fahrzeugrad übertragene zweite Antriebsdrehmoment unterschiedlich groß sind. In der einfachsten Möglichkeit ist vorgesehen, dass das jeweilige kurvenäußere Fahrzeugrad mit einer bestimmten Antriebskraft angetrieben wird, wohingegen das jeweilige kurveninnere Fahrzeugrad nicht angetrieben wird, also lastfrei mitläuft. Eine weitere Möglichkeit besteht darin, dass gemäß den vorherigen Ausführungen das kurvenäußere Fahrzeugrad mit einer bestimmten Antriebskraft angetrieben wird, während das kurveninnere Fahrzeugrad gleichzeitig verzögert oder abgebremst wird. Der letztgenannte Fall ist besonders vorteilhaft für langsames Fahren, da durch entgegengesetzte Antriebskraftrichtungen die Höhe der jeweiligen Antriebskraft geringer sein kann, um den gewünschten Lenkwinkel einzustellen.

Damit eine Spur des Fahrzeugs eingehalten wird und die Lenkwinkel der jeweiligen Fahrzeugräder der jeweiligen angetriebenen und lenkbaren Achse gleichmäßig eingestellt werden, sind die Fahrzeugräder der jeweiligen antreibbaren und lenkbaren Achse über eine Spurstange miteinander verbunden. Durch die Spurstange wird die Spurtreue des Fahrzeugs sichergestellt. Die Spur der Fahrzeugräder einer Achse kann derart eingestellt sein, dass bei einer Geradeausfahrt die Fahrzeugräder einer Achse exakt parallel zueinander ausgerichtet sind. Alternativ kann die Spur der Fahrzeugräder einer Achse derart eingestellt sein, dass die Fahrzeugräder mit einem Winkel zueinander eingestellt sein können, insbesondere von etwa 0,5 Grad, sodass die Fahrzeugräder aus der Vogelperspektive betrachtet mit der Fahrzeuglängsachse eine Pfeilform bilden.

Das Verzögern bzw. Bremsen des jeweiligen Fahrzeugrades kann mittels einer Bremsvorrichtung aktiv erfolgen. Mithin erfolgt in diesem Fall eine Verzögerung des jeweiligen kurveninneren Fahrzeugrades durch Bremsen. Denkbar ist auch, dass das geringere Antriebsdrehmoment durch eine Rekuperationsfunktion an der jeweiligen Antriebseinheit realisiert wird. Mithin erfolgt in diesem Fall eine Verzögerung des kurveninneren Fahrzeugrades durch Rekuperation.

Die Fahrwerksgeometrie ist derart ausgelegt, dass die Differenz der Antriebskraft der jeweiligen antreibbaren und lenkbaren Achse einen graduellen Lenkeinschlag zur Folge hat. Für eine gute Regelbarkeit des Antriebs sind zudem bevorzugt Dämpfungselemente vorgesehen. Das jeweilige Dämpfungselement kann als Gas- oder Fluid-Dämpfer oder aus einem Elastomer ausgebildet sein.

Als antreibbare Achse ist im Rahmen dieser Erfindung eine elektrisch antreibbare Achse zu verstehen. Die mit Muskelkraft antreibbare Achse, wenn diese an einer von der antreibbaren Achse verschiedenen Achse angeordnet ist, ist zwar ebenfalls antreibbar, jedoch wird eine solche Achse hier als mit Muskelkraft antreibbare Achse bezeichnet.

Vorzugsweise umfasst das Antriebssystem neben der ersten antreibbaren Achse eine zweite antreibbare Achse, aufweisend eine dritte elektromechanische Antriebseinheit und wenigstens eine vierte elektromechanische Antriebseinheit, wobei die dritte Antriebseinheit einem damit wirkverbundenen Fahrzeugrad der linken Fahrzeugseite zugeordnet ist und die vierte Antriebseinheit einem damit wirkverbundenen weiteren Fahrzeugrad der rechten Fahrzeugseite zugeordnet ist, wobei die Steuereinrichtung dazu eingerichtet ist, die Antriebseinheiten der zweiten antreibbaren Achse zur Einleitung und Ausführung des Lenkmanövers derart zu betätigen, dass eine Differenz zwischen einem dritten Antriebsdrehmoment der dritten Antriebseinheit und einem vierten Antriebsdrehmoment der vierten Antriebseinheit eingestellt wird. Die Funktionsweise der Erzeugung einer Antriebsdrehmomentdifferenz bzw. Antriebskraftdifferenz zwischen den Antriebseinheiten der zweiten antreibbaren Achse kann analog zu den obigen Ausführungen zur ersten antreibbaren Achse erfolgen. Damit lässt sich ein Allradantrieb für das Fahrzeug realisieren, sofern das Fahrzeug genau zwei Achsen aufweist. Zudem sind in diesem Fall beide Achsen lenkbare Achsen, um das Lenkmanöver gemäß den obigen Ausführungen einzuleiten oder auszuführen.

Als Fahrzeugseite ist entweder die linke oder rechte Fahrzeugflanke zu verstehen, wobei, wenn das Fahrzeug mehrere antreibbare Achsen aufweist, die Antriebsdrehmomente der Fahrzeugräder der linken und/oder der rechten Seite anpassbar sind, um die vorteilhafte Wirkung während des Einleitens oder Ausführens des Lenkmanövers gemäß den obigen Abschnitten der Beschreibung zu realisieren.

Bevorzugt ist zwischen wenigstens einer der elektromechanischen Antriebseinheiten und dem dazugehörigen Fahrzeugrad eine Untersetzungsstufe zur Übersetzung einer Drehzahl einer Antriebswelle der jeweiligen Antriebseinheit angeordnet, wobei die Untersetzungsstufe ein Antriebsrad, das mit einer Antriebswelle zumindest mittelbar drehfest verbunden ist, sowie ein damit wirkverbundenes Abtriebsrad, das mit einer Radnabe des jeweiligen Fahrzeugrades zumindest mittelbar drehfest verbunden ist, umfasst, wobei zumindest die Antriebswelle der jeweiligen Antriebseinheit und das Antriebsrad im Bodenbereich des Fahrzeugs und in Schwerkraftrichtung unterhalb des Abtriebsrades der Untersetzungsstufe angeordnet sind. Das Abtriebsrad ist im Wesentlichen achsparallel zum Antriebsrad angeordnet, wobei das Abtriebsrad oberhalb des Antriebsrades angeordnet ist. Daraus ergibt sich die Situation im Fahrzeug, dass die Antriebswelle der jeweiligen Antriebseinheit im Bodenbereich des Fahrzeugs angeordnet ist und die Antriebsleistung an die linke und/oder rechte Fahrzeugflanke zu dem jeweiligen Fahrzeugrad geführt wird. Erst kurz vor dem jeweiligen antreibbaren Fahrzeugrad wird die Antriebsleistung über die Untersetzungsstufe mit den achsparallelen Rädern hoch zur Radnabe geführt. Daraus ergibt sich ein niedriger Fahrzeugschwerpunkt, da ein wesentlicher Teil des Antriebssystems in den Bodenbereich des Fahrzeugs, insbesondere an einen möglichst tiefen Punkt des Fahrzeugs, verlagert werden kann, wodurch die Kippstabilität des Fahrzeugs verbessert wird.

Der Bodenbereich des Fahrzeugs ist Teil des Innenraums des Fahrzeugs und ist getrennt vom Außenbereich. Die Trennung des Innenraums des Fahrzeugs vom Au-ßenbereich erfolgt bevorzugt über die Karosserie, wobei der Bodenbereich mit dem entsprechenden Karosserieteil an der Unterseite des Fahrzeugs den Innenraum vom befahrenen Untergrund räumlich trennt. Je tiefer Bauteile des Fahrzeugs in oder an der Karosserie des Fahrzeugs angeordnet sind, desto tiefer liegt der Schwerpunkt des Fahrzeugs. Der Bodenbereich befindet sich insbesondere in Schwerkraftrichtung unterhalb des Fahrersitzes oder unterhalb der Pedale des Tretlagergetriebes. Der Bodenbereich ist insbesondere als Fußbodenbereich des Fahrzeugs zu verstehen.

Die Untersetzungsstufe ist derart ausgeführt, dass das Antriebsrad kleiner ist, also einen kleineren Durchmesser aufweist, als das Abtriebsrad, um die Untersetzung, also die Übersetzung ins Langsame, zu realisieren. Mittels der Untersetzungsstufe wird also eine Drehzahl der Antriebswelle reduziert, um das Fahrzeug entsprechend anzutreiben. Über die Untersetzungsstufe kann eine Leistungsdichte des Antriebs erhöht werden.

Vorzugsweise ist das Abtriebsrad der Untersetzungsstufe im Wesentlichen koaxial zur Radnabe des dazugehörigen Fahrzeugrades angeordnet. Damit wird die Anbindung der Untersetzungsstufe an die Radnabe des jeweiligen Fahrzeugrades vereinfacht und platzsparender gestaltet.

Die jeweilige elektromechanische Antriebseinheit ist bevorzugt eine elektrische Maschine, wobei die Antriebswelle ein Rotor der elektrischen Maschine ist oder mit dem Rotor drehfest verbunden bzw. gekoppelt ist. Der Rotor ist gegenüber einem gehäusefesten Stator der elektrischen Maschine drehbar gelagert. Die jeweilige als elektrische Maschine ausgebildete Antriebseinheit ist vorzugsweise mit einem elektrischen Speicher oder einer Spannungsquelle verbunden, der bzw. die die Antriebseinheit mit elektrischer Energie versorgt. Es ist denkbar, dass die elektromechanische Antriebseinheit ferner eine Getriebestufe umfasst, in die eine Antriebsleistung aus der elektrischen Maschine eingeleitet und anschließend zumindest mittelbar auf das jeweilige Fahrzeugrad übertragen wird. Die jeweilige Antriebseinheit ist von der Steuereinrichtung steuer- bzw. regelbar. Die jeweilige Antriebseinheit erzeugt eine Antriebsleistung, die über die Antriebswelle zumindest mittelbar, insbesondere über die Untersetzungsstufe, auf das jeweilige Fahrzeugrad übertragen wird. Die jeweilige Antriebseinheit erzeugt insbesondere ein Antriebsdrehmoment bzw. eine Antriebskraft, die auf das damit wirkverbundene Fahrzeugrad übertragen wird. Durch die im Bodenbereich des Fahrzeugs angeordnete jeweilige Antriebseinheit werden geringere, ungefederte Massen realisiert, was in besseren Fahrwerkseigenschaften resultiert. Zudem kann die Dämpfung verbessert werden und der Innenschallpegel kann insbesondere bei Bodenunebenheiten reduziert werden.

Vorzugsweise ist die jeweilige elektromechanische Antriebseinheit räumlich zwischen einer Fahrzeugmittelachse und der dazugehörigen Untersetzungsstufe angeordnet. Bevorzugt ist die jeweilige Antriebseinheit räumlich zwischen den Beinen des Fahrers im Bodenbereich des Fahrzeugs angeordnet. Die Antriebswelle der jeweiligen Antriebseinheit erstreckt sich ausgehend von der Antriebseinheit zur linken bzw. rechten Fahrzeugseite hin, wo sie zumindest mittelbar mit der Radnabe wirkverbunden ist, insbesondere über die Untersetzungsstufe. Um Winkelversätze oder Achsversetze zwischen der jeweiligen Antriebseinheit und der Radnabe auszugleichen, können ferner Gelenkwellen, insbesondere verlängerbare und/oder verkürzbare Gelenkwellen, vorgesehen werden. In diesem Sinn ist, insbesondere wenn eine Untersetzungsstufe oder dergleichen vorgesehen ist, die Antriebswelle der jeweiligen Antriebseinheit bevorzugt über eine Gelenkwelle mit dem Antriebsrad der jeweiligen Untersetzungsstufe antriebswirksam verbunden.

Unter einer "Welle" ist ein rotierbares Bauteil des Antriebssystems zu verstehen, über welches je zugehörige Komponenten des Antriebssystems drehfest miteinander verbunden sind. Die jeweilige Welle kann die Komponenten dabei axial oder radial oder auch sowohl axial und radial miteinander verbinden. Unter einer Welle ist nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Dass zwei Bauelemente des Antriebssystems drehfest "verbunden" bzw. "gekoppelt" sind bzw. "miteinander in Verbindung stehen", meint im Sinne der Erfindung eine permanente Koppelung dieser Bauelemente, sodass diese nicht unabhängig voneinander rotieren können. Insbesondere ist zwischen diesen Bauelementen, bei welchen es sich um Elemente der jeweiligen Antriebseinheit und/oder des Untersetzungsgetriebes und/oder anderen Bauteilen des Antriebssystems handeln kann, kein Schaltelement vorgesehen, sondern die entsprechenden Bauelemente sind fest miteinander gekoppelt. Auch eine drehelastische Verbindung zwischen zwei Bauteilen wird als fest oder drehfest verstanden. Insbesondere kann eine drehfeste Verbindung auch Gelenke beinhalten, z.B. um eine Lenkbewegung oder eine Einfederung eines Fahrzeugrades zu ermöglichen.

Vorzugsweise ist die Antriebswelle der jeweiligen Antriebseinheit wenigstens abschnittsweise in einem Lenktunnel im Bodenbereich des Fahrzeugs angeordnet. Ferner kann die Gelenkwelle und/oder eine Eingangswelle des Antriebsrades der Untersetzungsstufe wenigstens teil- oder abschnittsweise im Lenktunnel angeordnet sein. Der Lenktunnel ist beispielsweise ein aus einem dünnwandigen Profil ausgeformtes Bauteil, das am Boden der Fahrzeugkarosserie befestigt oder darin integriert ist. Der Lenktunnel schützt die Bauteile des Antriebssystems vor einer ungewollten Beschädigung, insbesondere bei Ein- und Ausstieg des Fahrers in das bzw. aus dem Fahrzeug.

Nach einem Ausführungsbeispiel ist die Untersetzungsstufe eine Stirnradstufe. Das Antriebsrad ist demnach ein Ritzel und das Abtriebsrad ist ein größeres Zahnrad, wobei das Zahnrad mit dem Ritzel direkt in Zahneingriff steht oder über ein dazwischen geschaltetes Zwischenrad wirkverbunden ist. Alternativ ist die Untersetzungsstufe ein Riementrieb oder ein Kettentrieb. Ein Riementrieb bzw. Kettentrieb ist im Vergleich zur Stirnradstufe mit miteinander kämmenden Zahnrädern unempfindlicher gegenüber äußeren Einflüssen wie Schmutz und/oder Feuchtigkeit.

Vorzugsweise ist die Steuereinrichtung dazu eingerichtet, mit einer Eingabeeinheit verbunden zu sein, wobei die Eingabeeinheit dazu eingerichtet ist, Steuerbefehle eines Nutzers des Muskel-Elektro-Hybridfahrzeug in die Steuereinrichtung einzugeben. Die Steuereinrichtung kommuniziert mit der Eingabeeinheit. Die Eingabeeinheit kann beispielsweise ein Joystick oder Betätigungshebel sein, der mehrere Funktionen erfüllen kann bzw. über den mehrere unterschiedliche Steuerbefehle erzeugbar und an die Steuereinrichtung übermittelt werden können. Über die Eingabeeinheit kann ein Beschleunigungs- oder Verzögerungswunsch an die Steuereinrichtung übermittelt werden. Jedenfalls wird über die Eingabeeinheit ein Lenkbefehl eingegeben und in Form von Signalen an die Steuereinrichtung übermittelt.

Anhand des Steuerbefehls kann die Steuereinrichtung entsprechende Signale an die jeweilige Antriebseinheit übermitteln. Beispielsweise können die Signale die Erhöhung oder Reduzierung einer Antriebsleistung, insbesondere eines Antriebsdrehmoments oder einer Antriebsdrehzahl, sein, woraus resultierend eine Beschleunigung oder Verzögerung des Fahrzeugs eingeleitet oder ausgeführt werden kann. Insbesondere kann mittels der Steuereinrichtung ein Lenkmanöver eingeleitet, ausgeführt und wieder beendet werden, indem, wie in den obigen Ausführungen bereits erläutert, eine Differenz von Antriebsdrehmomenten an der jeweiligen antreibbaren und lenkbaren Achse erzeugt wird. Dazu wird durch wenigstens eine Antriebseinheit eine Antriebsleistung zur Vorwärts- oder Rückwärtsfahrt erzeugt, um den Lenkwinkel der beiden ggfs. miteinander gekoppelten Fahrzeugräder einzustellen. Alternativ werden durch beide Antriebseinheiten entgegengesetzt wirkende Antriebskräfte erzeugt, wodurch ebenfalls der Lenkwinkel der beiden Fahrzeugräder einstellbar ist. Je größer die Antriebskraftdifferenz ist, desto größer ist der Lenkwinkel.

Unter dem Begriff "wirkverbunden" ist eine nicht schaltbare Verbindung zwischen zwei Bauteilen zu verstehen, welche zu einer permanenten Übertragung einer Antriebsleistung, insbesondere einer Drehzahl und/oder eines Drehmoments, vorgesehen ist. Die Verbindung kann dabei sowohl direkt oder über eine Festübersetzung erfolgen. Die Verbindung kann beispielsweise über eine feste Welle, eine Verzahnung, insbesondere eine Stirnradverzahnung, und/oder ein Umschlingungsmittel erfolgen.

Unter dem Begriff "zumindest mittelbar" ist zu verstehen, dass zwei Bauteile über mindestens ein weiteres Bauteil, das zwischen den beiden Bauteilen angeordnet ist, miteinander (wirk-)verbunden sind oder direkt und somit unmittelbar miteinander verbunden sind. Mithin können zwischen Wellen oder Zahnrädern noch weitere Bauteile angeordnet sein, die mit der Welle bzw. dem Zahnrad wirkverbunden sind.

Gemäß einem erfindungsgemäßen Verfahren zum Betreiben eines Antriebssystems für ein Muskel-Elektro-Hybridfahrzeug, umfassend ein Tretlagergetriebe, welches dazu eingerichtet ist, zumindest mit einem mit Muskelkraft erzeugten Antriebsdrehmoment von einem Benutzer über eine Tretkurbelwelle beaufschlagt zu werden, um wenigstens ein Fahrzeugrad zumindest mittelbar drehanzutreiben, sowie wenigstens eine erste antreibbare und lenkbare Achse, aufweisend eine erste elektromechanische Antriebseinheit und wenigstens eine zweite elektromechanische Antriebseinheit, wobei die erste Antriebseinheit einem damit wirkverbundenen Fahrzeugrad der linken Fahrzeugseite zugeordnet ist und die zweite Antriebseinheit einem damit wirkverbundenen weiteren Fahrzeugrad der rechten Fahrzeugseite zugeordnet ist, wobei die Antriebseinheiten mit einer Steuereinrichtung elektronisch verbunden ist, werden mittels der Steuereinrichtung die Antriebseinheiten der jeweiligen antreibbaren Achse zur Einleitung und Ausführung eines Lenkmanövers derart gesteuert, dass eine Differenz zwischen einem ersten Antriebsdrehmoment der ersten Antriebseinheit und einem zweiten Antriebsdrehmoment der zweiten Antriebseinheit eingestellt wird.

Die Steuereinrichtung ist dazu eingerichtet, einen Lenkwunsch sowie ein aktuell ausgeführtes Lenkmanöver zu erkennen. Das Lenkmanöver wird durch den Fahrer manuell eingeleitet, indem er bevorzugt mittels einer Eingabeeinheit einen dem Lenkwunsch entsprechenden Steuerbefehl erzeugt. Die Steuerbefehle können durch die Eingabeeinheit sensiert und von der Steuereinrichtung verarbeitet werden. Ein beispielsweise als Joystick ausgebildeter In diesem Sinn werden mittels der Steuereinrichtung Steuerbefehle eines Nutzers des Muskel-Elektro-Hybridfahrzeug durch eine Eingabeeinheit empfangen, wobei die Steuereinrichtung in Abhängigkeit der Steuerbefehle Steuersignale zumindest zur Einstellung des jeweiligen Antriebsdrehmoments an die jeweilige Antriebseinheit sendet.

Die Steuereinrichtung kann mit entsprechender Sensorik verbunden sein, um einen aktuellen Lenkwinkel eines oder mehrerer lenkbarer Fahrzeugräder, eine Fahrzeuggeschwindigkeit, eine Drehzahl wenigstens eines der Fahrzeugräder und/oder andere fahrbetriebsabhängige Messgrößen zu erfassen und der Steuereinrichtung zur Auswertung sowie zur Steuerung und Regelung der Antriebseinheiten bereitzustellen. Die Steuereinrichtung steuert insbesondere die Drehzahl der Antriebswelle der jeweiligen Antriebseinheit sowie ein an der jeweiligen Antriebswelle anliegendes Antriebsdrehmoment, derart, dass zur Einleitung und Ausführung des Lenkmanövers gemäß den vorherigen Ausführungen eine Differenz zwischen dem ersten Antriebsdrehmoment der ersten Antriebseinheit und dem zweiten Antriebsdrehmoment der zweiten Antriebseinheit erzeugt wird, wodurch einerseits ein Antrieb des Fahrzeugs in Vorwärtsfahrt- oder Rückwärtsfahrtrichtung erfolgt und andererseits ein in Abhängigkeit der Höhe der Differenz vorgesehener Lenkwinkel der Fahrzeugräder dieser antreibbaren und lenkbaren Achse eingestellt wird. Entsprechend erfolgt mittels Antriebssystems eine Kombination aus mechanisch entkoppelter Lenkung, insbesondere Steer-by-Wire-Lenkung, und digitaler Signalverarbeitung und -aufbereitung.

Die Steuereinrichtung ist dazu eingerichtet, die Steuersignale an Fahrsicherheitsaspekte anzugleichen. Mit anderen Worten kann mittels der Steuereinrichtung in Fahrbefehle, insbesondere aus Steuerbefehlen erzeugten Steuersignale, eingegriffen werden, beispielsweise wenn der gewünschte Fahrbetrieb, der durch den Steuerbefehl in das System eingegeben wird, ein instabiles Fahrverhalten zur Folge hätte.

Das System überwacht permanent, ob alle Antriebseinheiten in Takt und voll funktionstüchtig sind. Wenn ein Fehler oder Ausfall erkannt wird, kann die Steuereinrichtung durch entsprechende Steuersignale Einfluss auf den Antrieb des Fahrzeugs nehmen, insbesondere die noch funktionstüchtigen bzw. fehlerfreien Antriebseinheiten derart steuern, dass der Antrieb des Fahrzeugs sicher erfolgen oder ein zum Stehen kommen sicher eingeleitet und ausgeführt werden kann.

Es kann beispielsweise die Situation eintreten, dass eine Antriebseinheit aufgrund eines Fehlers ausfällt - es wird also eine Antriebskraft von F = 0 N übertragen. In diesem Fall stellt die noch intakte Antriebseinheit derselben Achse die Lenkfunktion durch einseitige Beschleunigung oder Verzögerung sicher. Währenddessen können die Bremsen der anderen Achse aktiviert werden, um das Fahrzeug sicher zum Stehen zu bringen.

Kommt es zu einer Blockade eines Antriebs, bzw. der Antriebswelle, muss die noch intakte Antriebseinheit zur Geradeausfahrt ebenfalls bis zur Blockade verzögern oder gemäß Lenkbefehl soweit möglich die Lenkung über graduelle Verzögerung sicherstellen. Währenddessen werden die Bremsen der anderen Achse aktiviert, um das Fahrzeug sicher zum Stehen zu bringen.

Während der Tretbewegung kann es, insbesondere bei unerfahrenen bzw. ungeübten Fahrern dazu kommen, dass eine Tretbewegung zu einer leichten Bewegung der an der Eingabeeinheit befindlichen Hand des Fahrers führt. Ein Vorteil des Systems besteht darin, ein Lenkeinfluss durch die Tretbewegung herausgefiltert werden kann. Mit anderen Worten kann das System dazu eingerichtet sein, ungewollte Lenkbefehle zu erkennen und entsprechend nicht auszuführen. Und zwar kann dies durch einen Softwarefilter erfolgen, insbesondere einem digitalen, adaptiven Fensterfilter, der beispielsweise eine Trittfrequenz überwachen und erkennen kann, ob der Fahrer mit der Trittfrequenz korrespondierende, ungewollte Lenkbefehle in die Eingabeeinheit eingibt. Der Softwarefilter ist bevorzugt auf der Steuereinrichtung hinterlegt. Wird eine Abhängigkeit zwischen der Trittfrequenz und den eingegebenen Steuerbefehlen erkannt, ist die Steuereinrichtung dazu eingerichtet, diese Steuerbefehle herauszufiltern und die entsprechenden Lenkbefehle nicht auszuführen. Dadurch wird ein feinfühliges und sicheres Lenken auch bei hohen Geschwindigkeiten und Kurbeldrehzahl ermöglicht.

Alternativ oder ergänzend ist oder sind in der Steuereinrichtung Kennfelder des maximal möglichen Lenkwinkels für jede Geschwindigkeit hinterlegt. Anhand der Kennfelder kann, wenn der Fahrer Steuerbefehle ausführt, die das Fahrzeug in einen unsicheren Zustand, zum Beispiel Kippen oder Schleudern, bringen würden, von der Steuereinrichtung eine Begrenzung des Lenkwinkels erfolgen, ungeachtet dessen, ob der Fahrer einen höheren Lenkwinkel als Steuerbefehl eingibt. Alternativ kann die Steuereinrichtung die Antriebseinheiten derart ansteuern, dass eine Fahrzeuggeschwindigkeit reduziert und der aktuelle Lenkwinkel gleichzeitig graduell auf den gewünschten Lenkwinkel erweitert wird. Dadurch wird die Fahrsicherheit signifikant erhöht.

Das erfindungsgemäße Verfahren ist ebenso vorteilhaft einsetzbar, wenn das Antriebssystem ferner eine zweite antreibbare Achse umfasst, aufweisend eine dritte elektromechanische Antriebseinheit und wenigstens eine vierte elektromechanische Antriebseinheit, wobei die dritte Antriebseinheit einem damit wirkverbundenen Fahrzeugrad der linken Fahrzeugseite zugeordnet ist und die vierte Antriebseinheit einem damit wirkverbundenen weiteren Fahrzeugrad der rechten Fahrzeugseite zugeordnet ist, wobei mittels der Steuereinrichtung die Antriebseinheiten der zweiten antreibbaren Achse zur Einleitung und Ausführung des Lenkmanövers derart gesteuert werden, dass eine Differenz zwischen einem dritten Antriebsdrehmoment der dritten Antriebseinheit und einem vierten Antriebsdrehmoment der vierten Antriebseinheit eingestellt wird. Es sei dazu auf die vorherigen Ausführungen zur ersten antreibbaren und lenkbaren Achse verwiesen.

Das erfindungsgemäße Antriebssystem ist in einem Muskel-Elektro-Hybridfahrzeug einsetzbar, aufweisend eine erste Achse und wenigstens eine zweite Achse, wobei an jeder Achse wenigstens zwei Fahrzeugräder drehbar angeordnet sind. Vorzugsweise weist das Fahrzeug in Summe vier Räder auf, je zwei an der Vorderachse und Hinterachse. Dabei kann, wie zuvor beschrieben, mindestens ein Fahrzeugrad, vorzugsweise die beiden Fahrzeugräder einer der Achsen, mit Muskelkraft angetrieben werden, und die beiden Fahrzeugräder der gleichen und/oder der jeweils anderen Achse, besonders bevorzugt alle Fahrzeugräder des Fahrzeugs, elektromechanisch und unabhängig voneinander angetrieben werden. Jedenfalls ist mindestens eine der Achsen sowohl antreibbar als auch lenkbar ausgeführt. Entsprechend sind die lenkbaren Fahrzeugräder am Fahrwerk aufgehangen. Das Antriebssystem, insbesondere die jeweilige Antriebseinheit, ist bevorzugt in Front-Quer-Bauweise verbaut, sodass die Antriebswelle sowie das Antriebsrad und, falls vorgesehen, das Abtriebsrad der Untersetzungsstufe im Wesentlichen quer zur Fahrzeuglängsrichtung ausgerichtet sind.

Das Muskel-Elektro-Hybridfahrzeug ist als Mikromobilitätsfahrzeug zu verstehen, beispielsweise als teilweise mit Muskelkraft und teilweise elektrisch betriebenes Fahrrad, insbesondere als Lastenrad oder Cargo-Bike, oder als sogenanntes Velomobil. Ein Lastenrad kann ein Hinterrad und zwei Vorderräder, oder umgekehrt, umfassen, wobei jeweils die Achse mit zwei Fahrzeugrädern als angetriebene Achse im Sinn dieser Erfindung zu verstehen ist. Ein Velomobil umfasst bevorzugt zwei Hinterräder und zwei Vorderräder. In diesem Fall können beide Achsen antreibbar sein. Der mit Muskelkraft erfolgende Antrieb des Muskel-Elektro-Hybridfahrzeugs wird zumindest teilweise von der jeweiligen Antriebseinheit unterstützt, um den Benutzer zu entlasten. Eine vollständige Übernahme des Antriebs durch die jeweilige Antriebseinheit ist zumindest temporär möglich. Das Muskel-Elektro-Hybridfahrzeug kann auch einspurig ausgebildet sein, umfassend ein erstes Fahrzeugrad an der Vorderachse und ein zweites Fahrzeugrad an der Hinterachse.

Die obigen Definitionen sowie Ausführungen zu technischen Effekten, Vorteilen und vorteilhaften Ausführungsformen des erfindungsgemäßen Antriebssystems gelten sinngemäß ebenfalls für das erfindungsgemäße Verfahren zum Betreiben des Antriebssystems sowie für das erfindungsgemäße Muskel-Elektro-Hybridfahrzeug, und umgekehrt.

Im Folgenden wird ein Ausführungsbeispiel der Erfindung anhand der schematischen Zeichnungen näher erläutert, wobei gleiche oder ähnliche Elemente mit dem gleichen Bezugszeichen versehen sind. Hierbei zeigt
- Fig. 1: eine stark schematische Längsschnittdarstellung eines erfindungsgemäßen Muskel-Elektro-Hybridfahrzeug gemäß einer bevorzugten Ausführungsform,
- Fig. 2: eine stark schematische Draufsicht auf das erfindungsgemäße Fahrzeug nach Fig. 1,
- Fig. 3: eine stark schematische Teillängsschnittdarstellung der Vorderachse des erfindungsgemäßen Fahrzeugs nach Fig. 1 und Fig. 2,
- Fig. 4: eine stark schematische Draufsicht der Vorderachse des erfindungsgemäßen Fahrzeugs nach Fig. 1 bis Fig. 3,
- Fig. 5: eine stark schematische Draufsicht auf das erfindungsgemäße Fahrzeug nach Fig. 1 bis Fig. 4 während eines Lenkmanövers nach rechts, und
- Fig. 6: eine stark schematische Draufsicht auf das erfindungsgemäße Fahrzeug nach Fig. 1 bis Fig. 5 während eines Lenkmanövers nach links.

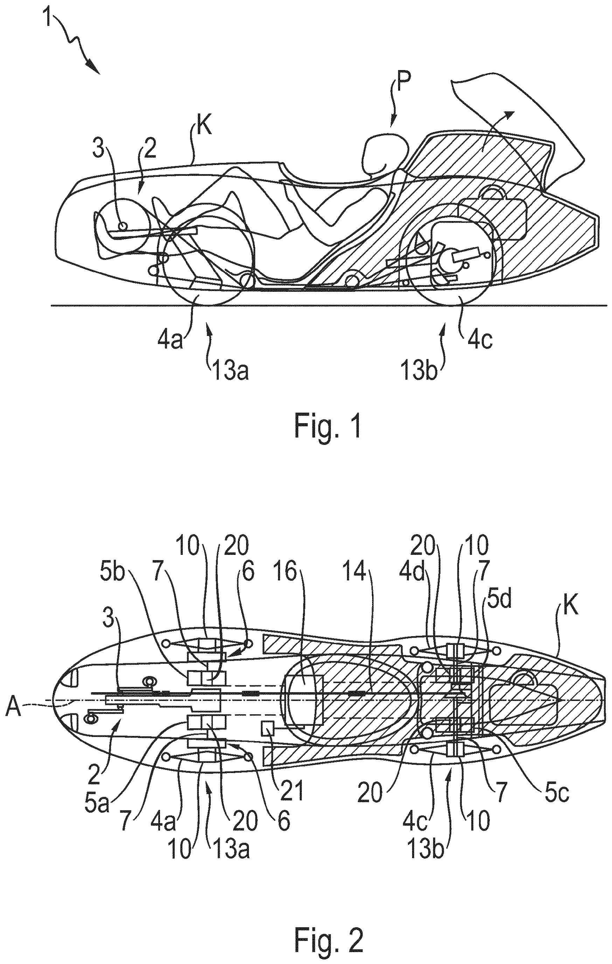

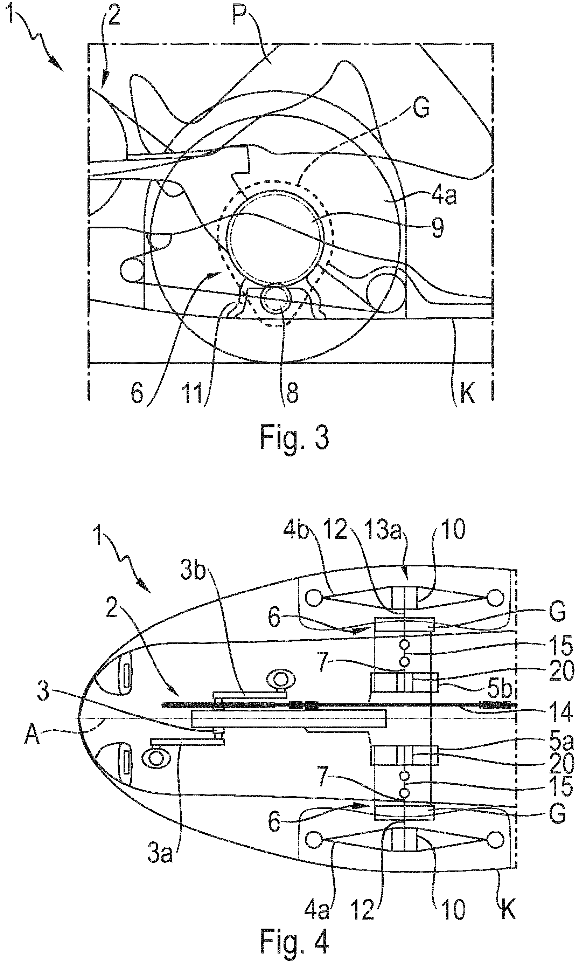

Gemäß Fig. 1 und Fig. 2 ist ein erfindungsgemäßes mehrspuriges Muskel-Elektro-Hybridfahrzeug 1 in Form eines Velomobils dargestellt, das nachfolgend vereinfacht Fahrzeug 1 genannt wird. Das Fahrzeug 1 weist zwei Achsen 13a, 13b auf, wobei die erste Achse 13a eine Vorderachse des Fahrzeugs 1 mit zwei drehbar daran angeordneten Fahrzeugrädern 4a, 4b und die zweite Achse 13b eine Hinterachse des Fahrzeugs 1 ebenfalls mit zwei drehbar daran angeordneten Fahrzeugrädern 4c, 4d ist. Beide Achsen 13a, 13b sind, wie nachfolgend beschrieben, antreibbare und lenkbare Achsen. Das erste und dritte Fahrzeugrad 4a, 4c sind auf der linken Fahrzeugseite angeordnet, wie in Fig. 1 zu sehen ist, wohingegen das zweite und vierte Fahrzeugrad 4b, 4d auf der rechten Fahrzeugseite angeordnet sind. Fig. 3 zeigt die erste Achse 13a mit dem ersten Fahrzeugrad 4a in der Seitenansicht und Fig. 4 zeigt die erste Achse 13a in der Draufsicht. In Fig. 1 und teilweise in Fig. 3 ist ein Fahrer P des Fahrzeugs 1 in einer für das als Velomobil ausgebildete Fahrzeug 1 typischen Sitz- bzw. Liegeposition angedeutet.

Das Fahrzeug 1 weist ein Antriebssystem auf, umfassend eine manuell betätigbares Tretlagergetriebe 2, in das von einem Benutzer über eine Tretkurbelwelle 3 ein erstes Antriebsdrehmoment eingebracht werden kann. An der Tretkurbelwelle 3 sind Pedale 3a, 3b angeordnet, über die der Fahrer P die Antriebsleistung in das Tretlagergetriebe 2 mit seiner eigenen Muskelkraft einleiten kann. Das Tretlagergetriebe 2 weist ferner ein - hier nicht näher gezeigtes - Ritzel auf, das mit einer Antriebskette 14 in Wirkverbindung steht, welches die mit Muskelkraft erbrachte Antriebsleistung auf die Fahrzeugräder 4c, 4d der zweiten Achse 13b bzw. Hinterachse des Fahrzeugs 1 überträgt. Mithin werden mittels des Tretlagergetriebes 2 die Fahrzeugräder mit dem Bezugszeichen 4c und 4d an der Hinterachse des Fahrzeugs 1 mittelbar drehangetrieben.

An der Vorderachse bzw. der ersten Achse 13a sind, wie in Fig. 2 bis Fig. 4 zu sehen ist, zwei elektromechanische Antriebseinheiten 5a, 5b angeordnet, die erste Antriebseinheit 5a links einer Fahrzeugmittelachse A und die zweite Antriebseinheit 5b rechts der Fahrzeugmittelachse A. Zwischen den Antriebseinheiten 5a, 5b der ersten Achse 13a und dem dazugehörigen Fahrzeugrad 4a, 4b ist eine Untersetzungsstufe 6 wirksam angeordnet. Die jeweilige elektromechanische Antriebseinheit 5a, 5b der ersten Achse 13a ist räumlich zwischen einer Fahrzeugmittelachse A und der jeweiligen Untersetzungsstufe 6 angeordnet. An der Hinterachse bzw. der zweiten Achse 13b sind ebenfalls zwei elektromechanische Antriebseinheiten 5c, 5d wirksam angeordnet, die dritte Antriebseinheit 5c links der Fahrzeugmittelachse A und die vierte Antriebseinheit 5d rechts der Fahrzeugmittelachse A. Damit sind alle vier Fahrzeugräder 4a - 4d separat angetriebene Fahrzeugräder, die durch entsprechenden regelbaren Antrieb mittels einer Steuereinrichtung 16 die Fahrdynamik des Fahrzeugs 1 durch wechselseitiges Antreiben und Verzögern beeinflussen können. Die Antriebseinheiten 5a - 5d sind mit einer Steuereinrichtung 16 zur Steuerung und Regelung derselben elektronisch verbunden.

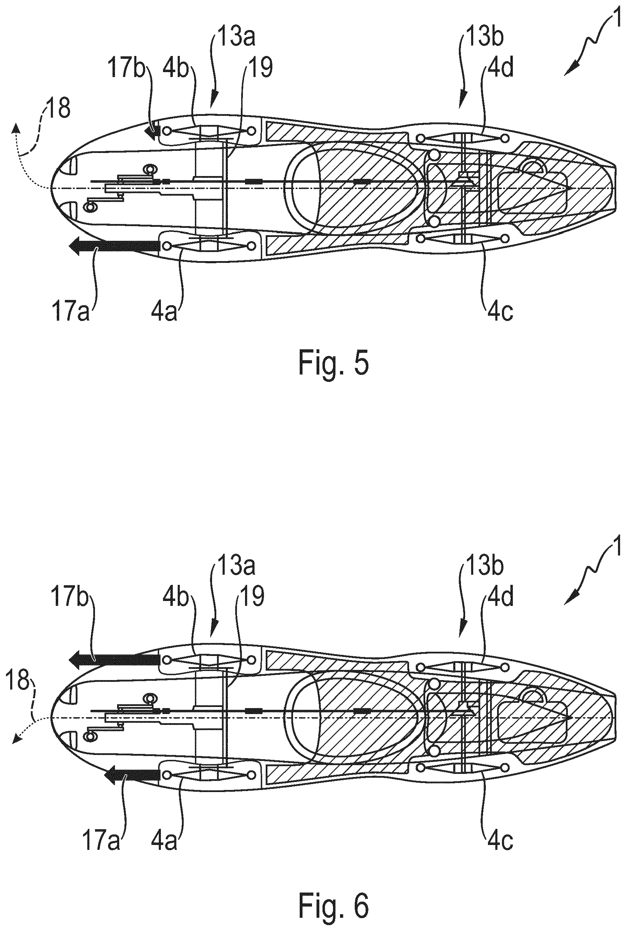

Beide Achsen 13a, 13b sind lenkbare Achsen, wobei das Fahrzeug 1 eine Eingabeeinheit 21 umfasst, die mit einer Steuereinrichtung 16 verbunden ist. Die Eingabeeinheit 21 ist dazu eingerichtet, Steuerbefehle eines Nutzers des Muskel-Elektro-Hybridfahrzeug 1 in die Steuereinrichtung 16 einzugeben. Mittels der Eingabeeinheit 21 kann ein Lenkwunsch bzw. ein gewünschter Lenkwinkel der Fahrzeugräder 4a - 4c in Form von Steuerbefehlen eingegeben werden, wobei die Steuerbefehle durch die Steuereinrichtung 16 in entsprechende Schaltsignale zur Steuerung der Antriebseinheiten 5a - 5b umgewandelt werden. In Fig. 5 und Fig. 6 ist am Beispiel der ersten Achse 13a eine Spurstange 19 gezeigt, die die Fahrzeugräder 4a, 4b der ersten Achse 13a miteinander koppelt, um eine eingestellte Spur zu halten. Folglich erfolgt das Einstellen des Lenkwinkels in Form eines Steer-by-Wire-Systems. Die Spurstange der zweiten Achse 13b ist in Fig. 5 und Fig. 6 hier nicht gezeigt. Diese ist analog zur ersten Achse 13a ausgeführt.

Die Antriebseinheiten 5a - 5d der jeweiligen Achse 13a, 13b sind jeweils identisch als elektrische Maschinen ausgebildet. Die elektrischen Maschinen werden durch einen - hier nicht gezeigten - Akkumulator mit elektrischer Energie versorgt, welcher mit einem - hier ebenfalls nicht gezeigten - gehäusefesten Stator der jeweiligen Antriebseinheit 5a - 5d elektronisch verbunden ist.

Wie in Fig. 2 in Verbindung mit Fig. 4 zu sehen ist, erstrecken sich ausgehend von der ersten Antriebseinheit 5a eine dazugehörige drehantreibbare Antriebswelle 7 in Richtung des bezogen auf die Fahrzeugmittelachse A linken Fahrzeugrades 4a der ersten Achse 13a und ausgehend von der zweiten Antriebseinheit 5b eine dazugehörige drehantreibbare Antriebswelle 7 in Richtung des bezogen auf die Fahrzeugmittelachse A rechten Fahrzeugrades 4b der ersten Achse 13a. Die Antriebswelle 7 der ersten Antriebseinheit 5a sowie wenigstens ein Teil einer weiter unten beschriebenen Gelenkwelle 15 erstreckt sich abschnittsweise in einem Lenktunnel 11 im Bodenbereich des Fahrzeugs 1. Die Antriebswelle 7 der zweiten Antriebseinheit 5b sowie wenigstens ein Teil einer weiteren Gelenkwelle 15 erstreckt sich ebenfalls abschnittsweise im Lenktunnel 11 im Bodenbereich des Fahrzeugs 1.

Nach Fig. 2 erstreckt sich ausgehend von der dritten Antriebseinheit 5c eine dazugehörige drehantreibbare Antriebswelle 7 in Richtung des bezogen auf die Fahrzeugmittelachse A linken Fahrzeugrades 4c der zweiten Achse 13b und ausgehend von der vierten Antriebseinheit 5d eine dazugehörige drehantreibbare Antriebswelle 7 in Richtung des bezogen auf die Fahrzeugmittelachse A rechten Fahrzeugrades 4d der zweiten Achse 13b.

Durch Bestromung des jeweiligen Stators wird ein drehbar dazu angeordneter Rotor, welcher wiederum drehfest mit der jeweiligen Antriebswelle 7 verbunden ist, in eine Drehbewegung relativ zum Stator versetzt. Die jeweilige Antriebswelle 7 kann alternativ auch mit einer separaten Rotorwelle des Rotors drehfest verbunden bzw. damit gekoppelt sein.

Die jeweilige Antriebseinheit 5a - 5d ist dazu eingerichtet, ein jeweiliges Antriebsdrehmoment und eine Drehzahl in der nachfolgend beschriebenen Weise auf das dazugehörige Fahrzeugrad 4a - 4d zu übertragen. Nachfolgend wird die antriebstechnische Verbindung zwischen der ersten Antriebseinheit 5a und dem ersten Fahrzeugrad 4a sowie zwischen der dritten Antriebseinheit 5c und dem dritten Fahrzeugrad 4c detaillierter beschrieben. Die Verbindung zwischen der zweiten Antriebseinheit 5b und dem zweiten Fahrzeugrad 4b bzw. zwischen der vierten Antriebseinheit 5d und dem vierten Fahrzeugrad 4d ist analog dazu ausgebildet, wobei die Anordnung der jeweiligen Achse 13a, 13b lediglich spiegelverkehrt ausgeführt ist.

Zwischen der ersten Antriebseinheit 5a und dem damit antreibbaren ersten Fahrzeugrad 4a ist eine Untersetzungsstufe 6 zur Übersetzung einer Drehzahl der Antriebswelle 7 der ersten Antriebseinheit 5a angeordnet. Die Untersetzungsstufe 6 ist in Fig. 3 in der Ansicht zu sehen. Die Untersetzungsstufe 6 ist vorliegend als Stirnradstufe ausgebildet. Demnach weist die Untersetzungsstufe 6 ein als Ritzel ausgeführtes Antriebsrad 8 auf, das über eine in Fig. 2 gezeigte Gelenkwelle 15 mit der Antriebswelle 7 antriebswirksam verbunden ist. Mittels der Gelenkwelle 15 ist ein Achsversatz, eine Längenänderung, ein Winkelversatz und oder eine Federbewegung zwischen der Antriebswelle 7 und dem Antriebsrad 8 ausgleichbar. Ferner weist die Untersetzungsstufe 6 ein als Zahnrad ausgebildetes Abtriebsrad 9 auf, das einen größeren Durchmesser aufweist als das Antriebsrad 8 sowie über eine Abtriebswelle 12 mit einer Radnabe 10 des ersten Fahrzeugrades 4a drehfest verbunden und koaxial dazu angeordnet ist. Dazu kann das Abtriebsrad 9 mit der Radnabe 10 über eine Steck- und/oder Schraubverbindung verbunden sein. Das Antriebsrad 8 und das Abtriebsrad 9 kämmen miteinander. Fig. 3 zeigt außerdem, dass die Antriebswelle 7 der ersten Antriebseinheit 5a und das Antriebsrad 8 der Untersetzungsstufe 6 im Bodenbereich des Fahrzeugs 1 und in Schwerkraftrichtung unterhalb des Abtriebsrades 9 der Untersetzungsstufe 6 angeordnet sind. Bezogen auf eine Horizontale ist die jeweilige Radnabe 10 und das Abtriebsrad 9 der Untersetzungsstufe 6 oberhalb der ersten bzw. dritten Antriebseinheit 5a, 5c und dem Antriebsrad 8 der Untersetzungsstufe 6 angeordnet.

Zum Schutz der Stirnradverzahnung der Untersetzungsstufe 6 ist ein gekapseltes Gehäuse G vorgesehen, das den die Räder 8, 9 aufnehmenden Innenraum des Gehäuses G abdichtet. Die jeweils als Stirnrad ausgebildeten Antriebsrad 8 und Abtriebsrad 9 können gefettet sein. Alternativ kann das Gehäuse G mit Schmiermittel, insbesondere Öl, gefüllt sein und die Untersetzungsstufe 5 kann durch geeignete Mittel geschmiert werden. Der Füllstand ist in diesem Fall beispielsweise auf Höhe der Verzahnung des in Schwerkraft Richtung unteren Antriebsrades, sodass per Schleuder- und Schleppwirkung das Schmiermittel beide Stirnräder vollständig benetzen kann. Alternativ könnte man den Achsversatz anstatt zweier Stirnräder mit Riemen oder Kette darstellen. In diesem Sinn wäre die Untersetzungsstufe 6 als Riementrieb oder als Kettentrieb ausgebildet, wobei die beiden Räder 8, 9 in diesem Fall über ein Zugmittel miteinander wirkverbunden wären.

Im Leistungsfluss zwischen der ersten Antriebseinheit 5a und der Gelenkwelle13 ist zudem ein - hier nicht gezeigter - elektrisch aktuierbarer, also schaltbarer, Freilauf angeordnet, mittels dessen eine Fahrwiderstandsoptimierung, insbesondere eine Reduzierung von Schlepp- und Reibmomenten, erfolgt. Der Freilauf kann alternativ auch zwischen dem Abtriebsrad 9 und der Radnabe 10 positioniert sein.

Die dritte Antriebseinheit 5c an der zweiten Achse 13b, insbesondere die Antriebswelle 7 der dritten Antriebseinheit 5c, ist koaxial zur Radnabe 10 des dritten Fahrzeugrades 4c angeordnet, wobei die Antriebswelle 7 eine Antriebsleistung direkt auf das dritte Fahrzeugrad 4c überträgt. Für die zweite Achse 13b ist ebenso denkbar, Gelenkwellen und/oder Untersetzungsstufen vorzusehen, um eine Antriebsleistung umzuwandeln oder einen Winkel- und/oder Längenausgleich zu realisieren. Da in dem hier gezeigten Fahrzeug 1 aber an der Hinterachse 13b mehr Bauraum zur Verfügung steht als an der Vorderachse 13a kann es insbesondere zur Reduzierung von Bauteilen vorteilhaft sein, die Antriebseinheiten 5c, 5d der Hinterachse 13b koaxial zur jeweiligen Radnabe 10 des dritten bzw. vierten Fahrzeugrades 4c, 4d anzuordnen.

Die Antriebseinheiten 5a - 5d sind nach Fig. 2 mit der Steuereinrichtung 16 elektronisch verbunden und von dieser unabhängig voneinander, also separat antreibbar. Die Steuereinrichtung 16 ist dazu eingerichtet, die Antriebseinheiten 5a - 5d der antreibbaren Achsen 13a, 13b in einem normalen Fahrbetrieb zu steuern und zu regeln. Anhand der Fig. 5 und Fig. 6 wird die Steuerung und Regelung des Antriebs anhand der beiden Antriebseinheiten 5a, 5b der ersten Achse 13a beschrieben. Der Antrieb der beiden Antriebseinheiten 5c, 5d der zweiten Achse 13b erfolgt in diesem Zusammenhang analog und für die jeweilige Fahrzeugseite entsprechend.

Mittels der Steuereinrichtung 16 werden Steuerbefehle des Fahrers P des Muskel-Elektro-Hybridfahrzeugs 1 durch die Eingabeeinheit 21 empfangen. In Abhängigkeit dieser Steuerbefehle werden von der Steuereinrichtung 16 Steuersignale zur Steuerung der Antriebseinheiten 5a - 5d erzeugt und übermittelt, um zumindest ein Antriebsdrehmoment bzw. eine Antriebskraft der jeweiligen Antriebseinheit 5a - 5d einzustellen.

In Fig. 5 ist das Fahrzeug 1 nach Fig. 1 bis Fig. 4 vor bzw. zu Beginn der Einleitung einer Rechtskurvenfahrt gezeigt. In Fig. 5 sind zwei Pfeile 17a, 17b gezeigt, wobei der in Vorwärtsfahrtrichtung linke Pfeil 17a länger ist als der rechte Pfeil 17b. Die Pfeile 17a, 17b veranschaulichen eine von der jeweiligen Antriebseinheit 5a, 5b erzeugte Antriebskraft, die in direktem Zusammenhang mit einem Antriebsdrehmoment der jeweiligen Antriebseinheit 5a, 5b. Die unterschiedliche Länge der Pfeile 17a, 17b soll verdeutlichen, dass die Antriebskraft zur Einleitung und Ausführung eines Lenkmanövers eine Differenz aufweisen, wobei für eine Rechtskurvenfahrt die jeweilige Antriebskraft der Antriebseinheiten 5a, 5c der linken Fahrzeugseite größer ist als die Antriebskraft der Antriebseinheiten 5b, 5d der rechten Fahrzeugseite. Anders gesagt ist hier die von der ersten Antriebseinheit 5a erzeugte erste Antriebskraft für das kurvenäußere erste Fahrzeugrad 4a größer als die von der zweiten Antriebseinheit 5b erzeugte zweite Antriebskraft für das kurveninnere zweite Fahrzeugrad 4b. Die Antriebskraftdifferenz bewirkt eine Lenkwinkeleinstellung der Fahrzeugräder 4a, 4b nach rechts (hier nicht gezeigt), gleichermaßen geführt durch die Spurstange 19. Die Differenz zwischen der Antriebskraft der linken und rechten Fahrzeugseite steht dabei in linearem Zusammenhang zum einstellbaren Lenkwinkel. Die Fahrzeugsteuerung erfolgt damit antriebskraftgesteuert.

In Fig. 6 ist das Fahrzeug 1 nach Fig. 1 bis Fig. 4 vor bzw. zu Beginn der Einleitung einer Linkskurvenfahrt gezeigt. In Fig. 6 sind ebenfalls die beiden Pfeile 17a, 17b gezeigt, wobei der in Vorwärtsfahrtrichtung linke Pfeil 17a kürzer ist als der rechte Pfeil 17b. Demnach ist die von der zweiten Antriebseinheit 5b erzeugte zweite Antriebskraft für das kurvenäußere zweite Fahrzeugrad 4b größer als die von der ersten Antriebseinheit 5a erzeugte erste Antriebskraft für das kurveninnere erste Fahrzeugrad 4a. Die Antriebskraftdifferenz bewirkt eine Lenkwinkeleinstellung der Fahrzeugräder 4a, 4b (hier nicht gezeigt) nach links, gleichermaßen geführt durch die Spurstange 19. Die Antriebskraftdifferenz in dem in Fig. 6 gezeigten Lenkmanöver ist kleiner als die Antriebskraftdifferenz in dem in Fig. 5 gezeigten Lenkmanöver, weshalb ein gestrichelter Pfeil 18 in Vorwärtsfahrtrichtung vor dem Fahrzeug 1, der den Kurvenradius der jeweiligen Kurvenfahrt andeutet, in Fig. 5 kleiner ist als in Fig. 6. Die Steuereinrichtung 16 ist dazu eingerichtet, über in Fig. 2 angedeutete Sensoren 20, das Antriebsdrehmoment bzw. die Antriebskraft der jeweiligen Antriebseinheit 5a - 5d zu überwachen.

Die geringere Antriebskraft kann realisiert werden, indem das jeweilige Fahrzeugrad 4a -4d verzögert oder abgebremst wird. Alternativ kann eine Rekuperation erfolgen, wobei die jeweilige Antriebseinheit in einen Generatorbetrieb wechselt.

Es ist denkbar, dass die Antriebskräfte der Hinterräder bzw. der Fahrzeugräder 4c, 4d der zweiten Achse 13b für die linke und rechte Fahrzeugseite identisch zu den Antriebskräften der Vorderräder bzw. der Fahrzeugräder 4a, 4b der ersten Achse 13a eingestellt werden. Möglich ist auch, dass kleinere Antriebskräfte, jedoch mit gleicher Differenz, eingestellt werden.

Die Steuereinrichtung 16 ist dazu eingerichtet, die an die jeweilige Antriebseinheit 5a, 5b übermittelten Steuersignale an Fahrsicherheitsaspekte anzugleichen. Gemäß den obigen Ausführungen kann so ein fehlerunanfälliger und sicherer Antrieb des Fahrzeugs 1 erfolgen. Das Fahrzeug 1 kann vor einem Kippen oder Schleudern geschützt werden, insbesondere bei wechselhaften Fahrbahnen, beispielsweise bei Eisbildung oder nasser Fahrbahn.

Weitere Vorteile des Antriebssystems sind unter anderem eine geringere gefederte Masse im Vergleich beispielsweise zu Nabenmotoren, verbesserte Fahrwerksleistungen, bessere Dämpfungseigenschaften, weniger Vibration im Fahrzeug durch Fahrbahnunebenheiten, eine vereinfachte Rad-Demontage als bei Nabenmotoren, eine höhere mögliche Drehzahl der Antriebswelle 7 sowie eine höhere Leistungsdichte der jeweiligen Antriebseinheit 5a, 5b, 5c, 5d. Indem die jeweilige Antriebseinheit 5a - 5d im Bereich oder auf der Fahrzeugmittelachse A angeordnet ist, ist sie besser vor Umwelteinflüssen geschützt. Zudem wird ein niedrigerer Fahrzeugschwerpunkt erreicht, der eine erhöhte Kippstabilität zur Folge hat.

Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Beschreibung und der Patentansprüche. Denkbar ist beispielsweise, dass nur die Vorderachse 13a oder nur die Hinterachse 13b als antreibbare und lenkbare Achse mit entsprechenden Antriebseinheiten 5a, 5c bzw. 5b, 5d ausgestattet ist. Die jeweils andere Achse kann in diesem Fall durch eine, vorzugsweise zwei Antriebseinheiten antreibbar, aber nicht lenkbar ausgeführt sein, um lediglich den Antrieb des Fahrzeugs 1 zu unterstützen. Mit nur einer antreibbaren und lenkbaren Achse ist das System gleichermaßen dazu geeignet, die genannten Wirkungen zu erzielen.

### Bezugszeichen

- 1: Muskel-Elektro-Hybridfahrzeug
- 2: Tretlagergetriebe
- 3: Tretkurbelwelle
- 3a: Erstes Pedal
- 3b: Zweites Pedal
- 4a: Erstes Fahrzeugrad
- 4b: Zweites Fahrzeugrad
- 4c: Drittes Fahrzeugrad
- 4d: Viertes Fahrzeugrad
- 5a: Erste Antriebseinheit
- 5b: Zweite Antriebseinheit
- 5c: Dritte Antriebseinheit
- 5d: Vierte Antriebseinheit
- 6: Untersetzungsstufe
- 7: Antriebswelle
- 8: Antriebsrad
- 9: Abtriebsrad
- 10: Radnabe des Fahrzeugrades
- 11: Lenktunnel
- 12: Abtriebswelle
- 13a: Erste Achse des Muskel-Elektro-Hybridfahrzeugs
- 13b: Zweite Achse des Muskel-Elektro-Hybridfahrzeugs
- 14: Antriebskette
- 15: Gelenkwelle
- 16: Steuereinrichtung
- 17a: Erster Pfeil
- 17b: Zweiter Pfeil
- 18: Gestrichelter Pfeil
- 19: Spurstange
- 20: Sensor
- 21: Eingabeeinheit
- A: Fahrzeugmittelachse
- G: Gehäuse
- P: Fahrer

## Patentansprüche

1. Antriebssystem für ein Muskel-Elektro-Hybridfahrzeug (1), umfassend ein Tretlagergetriebe (2), das dazu eingerichtet ist, zumindest mit einem mit Muskelkraft erzeugten Antriebsdrehmoment von einem Benutzer über eine Tretkurbelwelle (3) beaufschlagt zu werden, um wenigstens ein Fahrzeugrad (4c) zumindest mittelbar drehanzutreiben, sowie wenigstens eine erste antreibbare und lenkbare Achse (13a), aufweisend eine erste elektromechanische Antriebseinheit (5a) und wenigstens eine zweite elektromechanische Antriebseinheit (5b), wobei die erste Antriebseinheit (5a) einem damit wirkverbundenen Fahrzeugrad (4a) der linken Fahrzeugseite zugeordnet ist und die zweite Antriebseinheit (5b) einem damit wirkverbundenen weiteren Fahrzeugrad (4b) der rechten Fahrzeugseite zugeordnet ist, wobei die Antriebseinheiten (5a, 5b) mit einer Steuereinrichtung (16) elektronisch verbunden sind, die dazu eingerichtet ist, die Antriebseinheiten (5a, 5b) der jeweiligen antreibbaren Achse (13a) zur Einleitung und Ausführung eines Lenkmanövers derart zu steuern, dass eine Differenz zwischen einem ersten Antriebsdrehmoment der ersten Antriebseinheit (5a) und einem zweiten Antriebsdrehmoment der zweiten Antriebseinheit (5b) eingestellt wird.

2. Antriebssystem nach Anspruch 1, umfassend eine zweite antreibbare und lenkbare Achse (13b), aufweisend eine dritte elektromechanische Antriebseinheit (5c) und wenigstens eine vierte elektromechanische Antriebseinheit (5d), wobei die dritte Antriebseinheit (5c) einem damit wirkverbundenen Fahrzeugrad (4c) der linken Fahrzeugseite zugeordnet ist und die vierte Antriebseinheit (5d) einem damit wirkverbundenen weiteren Fahrzeugrad (4d) der rechten Fahrzeugseite zugeordnet ist, wobei die Steuereinrichtung (16) dazu eingerichtet ist, die Antriebseinheiten (5a - 5d) der zweiten antreibbaren Achse (13b) zur Einleitung und Ausführung des Lenkmanövers derart zu steuern, dass eine Differenz zwischen einem dritten Antriebsdrehmoment der dritten Antriebseinheit (5c) und einem vierten Antriebsdrehmoment der vierten Antriebseinheit (5d) eingestellt wird.

3. Antriebssystem nach Anspruch 1 oder 2, wobei die Fahrzeugräder (4a - 4d) der jeweiligen antreibbaren und lenkbaren Achse (13a, 13b) über eine Spurstange (19) miteinander verbunden sind.

4. Antriebssystem nach einem der vorhergehenden Ansprüche, wobei zwischen wenigstens einer der elektromechanischen Antriebseinheiten (5a - 5d) und dem dazugehörigen Fahrzeugrad (4a - 4d) eine Untersetzungsstufe (6) zur Übersetzung einer Drehzahl einer Antriebswelle (7) der jeweiligen Antriebseinheit (5a) angeordnet ist, wobei die Untersetzungsstufe (6) ein Antriebsrad (8), das mit einer Antriebswelle (7) zumindest mittelbar drehfest verbunden ist, sowie ein damit wirkverbundenes Abtriebsrad (9), das mit einer Radnabe (10) des jeweiligen Fahrzeugrades (4a ,4b) zumindest mittelbar drehfest verbunden ist, umfasst, wobei zumindest die Antriebswelle (7) der jeweiligen Antriebseinheit (5a) und das Antriebsrad (8) im Bodenbereich des Muskel-Elektro-Hybridfahrzeugs (1) und in Schwerkraftrichtung unterhalb des Abtriebsrades (9) der Untersetzungsstufe (6) angeordnet sind.

5. Antriebssystem nach Anspruch 3 oder 4, wobei die jeweilige elektromechanische Antriebseinheit (5a - 5d) räumlich zwischen einer Fahrzeugmittelachse (A) und der dazugehörigen Untersetzungsstufe (6) angeordnet ist.

6. Antriebssystem nach einem der Ansprüche 3 bis 5, wobei die Antriebswelle (7) der jeweiligen Antriebseinheit (5a) wenigstens abschnittsweise in einem Lenktunnel (11) im Bodenbereich des Muskel-Elektro-Hybridfahrzeugs (1) angeordnet ist.

7. Antriebssystem nach einem der Ansprüche 3 bis 6, wobei das Abtriebsrad (9) der Untersetzungsstufe (6) im Wesentlichen koaxial zur Radnabe (10) des dazugehörigen Fahrzeugrades (4a, 4b) angeordnet ist.

8. Antriebssystem nach einem der Ansprüche 3 bis 7, wobei die Untersetzungsstufe (6) eine Stirnradstufe ist.

9. Antriebssystem nach einem der Ansprüche 3 bis 8, wobei die Antriebswelle (7) der jeweiligen Antriebseinheit (5a - 5d) über eine Gelenkwelle (13) mit dem Antriebsrad (8) der jeweiligen Untersetzungsstufe (6) antriebswirksam verbunden ist.

10. Antriebssystem nach einem der vorhergehenden Ansprüche, wobei die Steuereinrichtung (16) dazu eingerichtet ist, mit einer Eingabeeinheit (21) verbunden zu sein, wobei die Eingabeeinheit (21) dazu eingerichtet ist, Steuerbefehle eines Nutzers des Muskel-Elektro-Hybridfahrzeug (1) in die Steuereinrichtung (16) einzugeben.

11. Verfahren zum Betreiben eines Antriebssystems für ein Muskel-Elektro-Hybridfahrzeug (1), umfassend ein Tretlagergetriebe (2), welches dazu eingerichtet ist, zumindest mit einem mit Muskelkraft erzeugten Antriebsdrehmoment von einem Benutzer über eine Tretkurbelwelle (3) beaufschlagt zu werden, um wenigstens ein Fahrzeugrad (4c) zumindest mittelbar drehanzutreiben, sowie wenigstens eine erste antreibbare und lenkbare Achse (13a), aufweisend eine erste elektromechanische Antriebseinheit (5a) und wenigstens eine zweite elektromechanische Antriebseinheit (5b), wobei die erste Antriebseinheit (5a) einem damit wirkverbundenen Fahrzeugrad (4a) der linken Fahrzeugseite zugeordnet ist und die zweite Antriebseinheit (5b) einem damit wirkverbundenen weiteren Fahrzeugrad (4b) der rechten Fahrzeugseite zugeordnet ist, wobei die Antriebseinheiten (5a, 5b) mit einer Steuereinrichtung (16) elektronisch verbunden ist, wobei mittels der Steuereinrichtung (16) die Antriebseinheiten (5a, 5b) der jeweiligen antreibbaren Achse (13a) zur Einleitung und Ausführung eines Lenkmanövers derart zu steuern, dass eine Differenz zwischen einem ersten Antriebsdrehmoment der ersten Antriebseinheit (5a) und einem zweiten Antriebsdrehmoment der zweiten Antriebseinheit (5b) eingestellt wird.

12. Verfahren nach Anspruch 11, umfassend eine zweite antreibbare und lenkbare Achse (13b), aufweisend eine dritte elektromechanische Antriebseinheit (5c) und wenigstens eine vierte elektromechanische Antriebseinheit (5d), wobei die dritte Antriebseinheit (5c) einem damit wirkverbundenen Fahrzeugrad (4c) der linken Fahrzeugseite zugeordnet ist und die vierte Antriebseinheit (5d) einem damit wirkverbundenen weiteren Fahrzeugrad (4d) der rechten Fahrzeugseite zugeordnet ist, wobei mittels der Steuereinrichtung (16) die Antriebseinheiten (5a - 5d) der zweiten antreibbaren Achse (13b) zur Einleitung und Ausführung des Lenkmanövers derart gesteuert werden, dass eine Differenz zwischen einem dritten Antriebsdrehmoment der dritten Antriebseinheit (5c) und einem vierten Antriebsdrehmoment der vierten Antriebseinheit (5d) eingestellt wird.

13. Verfahren nach Anspruch 11 oder 12, wobei mittels der Steuereinrichtung (16) Steuerbefehle eines Nutzers des Muskel-Elektro-Hybridfahrzeug (1) durch eine Eingabeeinheit (21) empfangen werden, wobei die Steuereinrichtung (16) in Abhängigkeit der Steuerbefehle Steuersignale zumindest zur Einstellung des jeweiligen Antriebsdrehmoments an die jeweilige Antriebseinheit (5a - 5d) sendet.

14. Verfahren nach Anspruch 13, wobei die Steuereinrichtung (16) dazu eingerichtet ist, die Steuersignale an Fahrsicherheitsaspekte anzugleichen.

15. Muskel-Elektro-Hybridfahrzeug (1), aufweisend eine erste Achse (13a) und wenigstens eine zweite Achse (13b), wobei an jeder Achse (13a, 13b) wenigstens ein Fahrzeugrad (4a, 4b, 4c, 4d) drehbar angeordnet ist, ferner aufweisend ein Antriebssystem nach einem der Ansprüche 1 bis 10.
